# EUROPEAN PATENT SPECIFICATION

(11) **EP 4 654 823 B1**
(45) Date of publication and mention of the grant of the patent: **09.12.2026**
(21) Application number: 24708280.3
(22) Date of filing: 19.01.2024
(51) Int. Cl.: A22B 5/00

(54) **POULTRY CHILLER**
GEFLÜGELKÜHLER
REFROIDISSEUR DE VOLAILLE

(30) Priority: 23.01.2023 US 202363481077 P
(43) Date of publication of application: 03.12.2025
(73) Proprietor: JBT Marel Corporation, Chicago, IL 60602 (US)
(72) Inventor: BOMAR, Michael, Vilonia, Arkansas 72173 (US); VIEIRA, Emmanuel Machado, Lakeland, Florida 33813 (US); HUGGINS, Dustin, Russellville, Arkansas 72802 (US)
(74) Representative: AWA Sweden AB
(86) International application number: PCT/US2024/012276
(87) International publication number: WO 2024/158652

(56) References cited:
- EP-A2- 2 266 411
- US-A1- 2014 262 152

## Description

### BACKGROUND

After evisceration, slaughtered poultry carcasses are rapidly chilled to preserve the quality of the meat. Various types of poultry chillers are known. One type is an auger-type poultry chiller. Auger-type chillers are typically in the form of semi-cylindrical tanks filled with chilled water. The carcasses are placed in one end of the tank and moved to the other end by a rotating auger. Chiller water is pumped through the tank in the opposite direction to the movement of the carcasses under the influence of the rotating auger.

A drawback of the prior auger chillers is that the poultry carcasses are locked into one flight of the auger as they move through the chiller. For this reason, it is commonly seen that one flight of a chiller is overloaded while the chiller as a whole is relatively empty. Also, if the level of the water in the tank is too high, the carcasses may flow over the top of the auger and move from one flight to the next. These situations can cause one flight to be loaded too heavily and also influence how long the carcasses remain in the chiller before exiting.

In an attempt to address the above issues, chillers have been built with multiple blade augers with long pitches, for example 40 feet (12.2 meters) in length. These chillers define spiral pockets between adjacent auger blades and the inner surface to the tank, and the auger blades are configured to block passage of a poultry carcass between adjacent spiral pockets.

However, such long-pitch auger type poultry chillers have a long, substantially open product travel path which permits relatively free movement of product. This can result in a large amount of variability in the length of time that it takes for a carcass to travel the length of the chiller tank, and thus a large standard deviation in dwell time of the carcass in the chiller tank.

Current long pitch auger type poultry chillers also use a standard or singular auger pitch without consideration to the chiller tank diameter. This results in variation of the auger flight profile when the diameter of the tank is changed. The present disclosure seeks to address the above limitations of existing poultry chillers, including current long pitch auger type poultry chillers. US 2014/262152 A1 discloses an auger-type poultry chiller having an auger with multiple long-pitch auger blades.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with one embodiment of the present disclosure, a chiller for processing food with the features according to claim 1 is provided. The chiller includes a tank having an inner surface, and an auger positioned at least partially within the tank, wherein the auger comprises a longitudinal shaft and at least four auger blades, each of the auger blades spirals around the shaft at a position along the longitudinal shaft, a plurality of spiral pockets are formed by the auger blades and the inner surface of the tank, and each of the auger blades comprises a pitch in the range of from 1.5 to three times the diameter of the auger blades.

In any of the embodiments described herein, wherein each of the plurality of auger blades comprises a pitch in the range of from 2 to 2.5 times the diameter of the auger blades

In any of the embodiments described herein, wherein the plurality of auger blades comprises from four to eight auger blades depending on the diameter of the auger blades.

In any of the embodiments described herein, wherein as the diameter of the auger blades increases, the number of the plurality of auger blades increases.

According to the invention, the distance separating adjacent auger blades along the pitch of the auger blades is from 36 to 72 inches (91-183 cm) .

In any of the embodiments described herein, wherein the distance separating adjacent auger blades along the pitch of the auger blades is from 36 to 48 inches (91-122 cm).

In any of the embodiments described herein, wherein each of the plurality of auger blades are substantially equally distant from one another around the shaft.

In any of the embodiments described herein, wherein the tank comprises an auger section and an unloader section.

In any of the embodiments described herein, wherein the unloader section of the tank comprises a plurality of unloader paddles.

In any of the embodiments described herein, wherein the unloader section of the tank comprises an unloader chute.

In any of the embodiments described herein, further comprising a separator ring extending around the interior of the tank to separate the auger section from the unloader section of the tank.

In any of the embodiments described herein, wherein said auger is operable to force a poultry carcass to rotate around the shaft when the auger rotates.

In any of the embodiments described herein, wherein the auger is configured to lift the poultry carcass from the auger section into the unloader section.

In any of the embodiments described herein, wherein each of said plurality of auger blades spirals at least one full revolution around the shaft.

In accordance with one embodiment of the not forming part of the invention, a chiller is provided. The chiller includes a tank comprising an auger section having an inner surface, wherein the auger section comprises a first end and a second end, and an auger positioned at least partially within the auger section of the tank, wherein the auger comprises a shaft and a plurality of auger blades, each of the plurality of auger blades spirals around the shaft, each of the plurality of auger blades comprises a pitch in the range of from 1.5 to three times the diameter of the auger blade, a plurality of spiral pockets are formed between the plurality of auger blades and the inner surface of the auger section of said tank, the plurality of spiral pockets extend between the first end and the second end of the auger section of the tank, the plurality of auger blades are configured to block passage of a poultry carcass between the plurality of spiral pockets.

In any of the embodiments described herein, wherein each of the plurality of auger blades comprises a pitch in the range of from 2 to 2.5 times the diameter of the auger blade.

In any of the embodiments described herein, wherein the plurality of auger blades comprises from four to eight auger blades depending on the diameter of the auger blades.

In any of the embodiments described herein, wherein as the diameter of the auger blades increases, the number of the plurality of auger blades increases.

In any of the embodiments described herein, wherein distance separating adjacent auger blades along the pitch of the auger blades is from 36 to 72 inches (91-183 cm).

In any of the embodiments described herein, wherein distance separating adjacent auger blades along the pitch of the auger blades is from 36 to 48 inches (91-122 cm).

In any of the embodiments described herein, wherein each of the plurality of auger blades are substantially equally distant from one another around the shaft.

In any of the embodiments described herein, wherein the auger is operable to force the poultry carcass to rotate around the shaft when the auger rotates.

In accordance with one embodiment of the present disclosure, a chiller is provided. The chiller includes a tank comprising an inner surface, and an auger positioned at least partially within the tank, wherein the auger is comprised of a shaft and a first auger blade, a second auger blade, a third auger blade, and a fourth auger blade attached to the shaft, wherein each of the plurality of auger blades comprises a pitch in the range of from 1.5 to three times the diameter of the auger blade, wherein the first auger blade, the second auger blade, and the inner surface of the tank forms a first spiral pocket, wherein the second auger blade, the third auger blade, and the inner surface of the tank forms a second spiral pocket, wherein the third auger blade, the fourth auger blade, and the inner surface of the tank forms a third spiral pocket, wherein the fourth auger blade, the first auger blade, and the inner surface of the tank forms a fourth spiral pocket, wherein the first spiral pocket is configured to contain a poultry carcass within the first spiral pocket as the auger rotates.

In any of the embodiments described herein, wherein each of the plurality of auger blades comprises a pitch in the range of from 2 to 2.5 times the diameter of the auger blade.

In any of the embodiments described herein, wherein the plurality of auger blades comprises from four to eight auger blades depending on the diameter of the auger blades, with the number of auger blades increasing with an increase in the diameter of the auger blades.

In any of the embodiments described herein, wherein distance separating adjacent auger blades along the pitch of the auger blades is from 36 to 72 inches (91-183 cm).

In any of the embodiments described herein, wherein distance separating adjacent auger blades along the pitch of the auger blades is from 36 to 48 inches (91-122 cm).

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is an isometric view of an example of a poultry chiller of the present disclosure taken from above the outlet end of the chiller;
FIGURE 2 is a view similar to FIGURE 1, but taken from the side of the chiller, and with parts removed to better view the interior of the chiller;
FIGURE 3 is view similar to FIGURE 1, but with parts removed to better view the auger;
FIGURE 4 is a top or plan view of FIGURE 1; and
FIGURE 5 is a cross-sectional view of FIGURE 4 taken along lines 5-5 thereof.

### DETAILED DESCRIPTION

The description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein.

The present application may include references to "directions," such as "forward," "rearward," "front," "back," "ahead," "behind," "upward," "downward," "above," "below," "top," "bottom," "right hand," "left hand," "in," "out," "extended," "advanced," "retracted," "proximal," and "distal." These references and other similar references in the present application are only to assist in helping describe and understand the present disclosure and are not intended to limit the present invention to these directions.

The present application may include modifiers such as the words "generally," "approximately," "about", or "substantially." These terms are meant to serve as modifiers to indicate that the "dimension," "shape," "temperature," "time," or other physical parameter in question need not be exact, but may vary as long as the function that is required to be performed can be carried out. For example, in the phrase "generally circular in shape," the shape need not be exactly circular as long as the required function of the structure in question can be carried out.

In the following description, various embodiments of the present disclosure are described. In the following description and in the accompanying drawings, the corresponding systems assemblies, apparatus, and units may be identified by the same part number, but with an alpha suffix. The descriptions of the parts/components of such systems assemblies, apparatus, and units that are the same or similar are not repeated so as to avoid redundancy in the present application.

In the present application and claims, references to "carcass," "poultry carcass," "poultry," "food," and "product" are used interchangeably and are meant to include all manner of poultry carcasses, whether chicken, Guinea Hens, turkey, duck, goose, grouse pheasant, etc. Also, other types of foods are to be included, for example, fish, shellfish, fruits, vegetables.

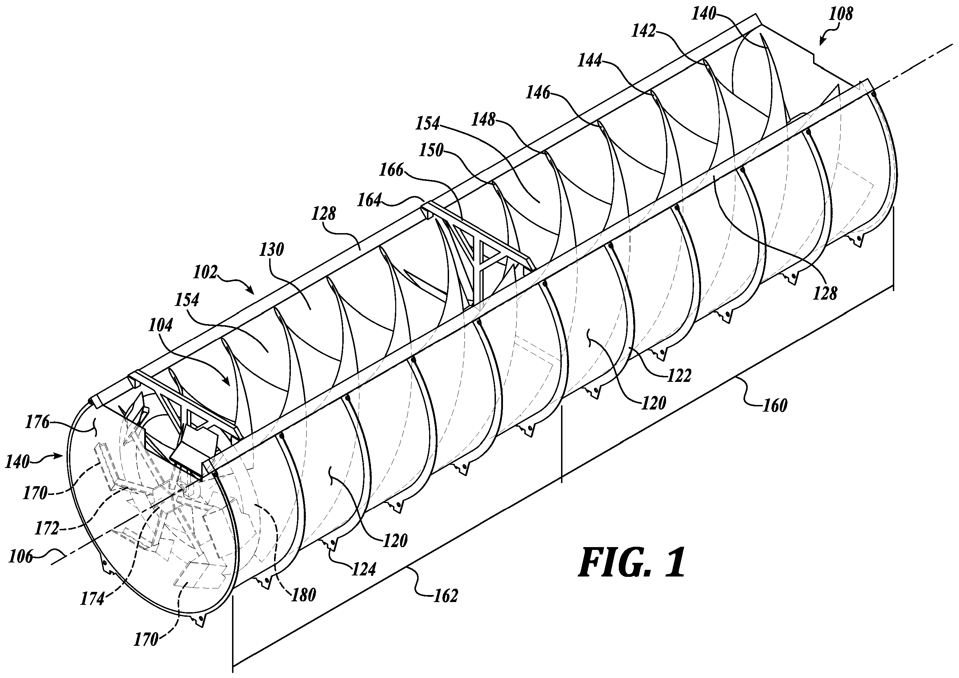

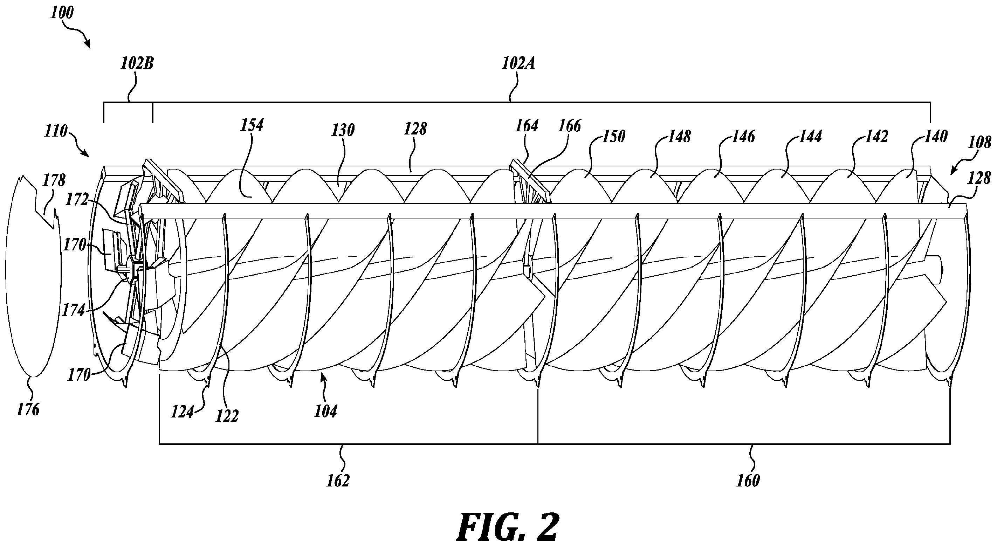

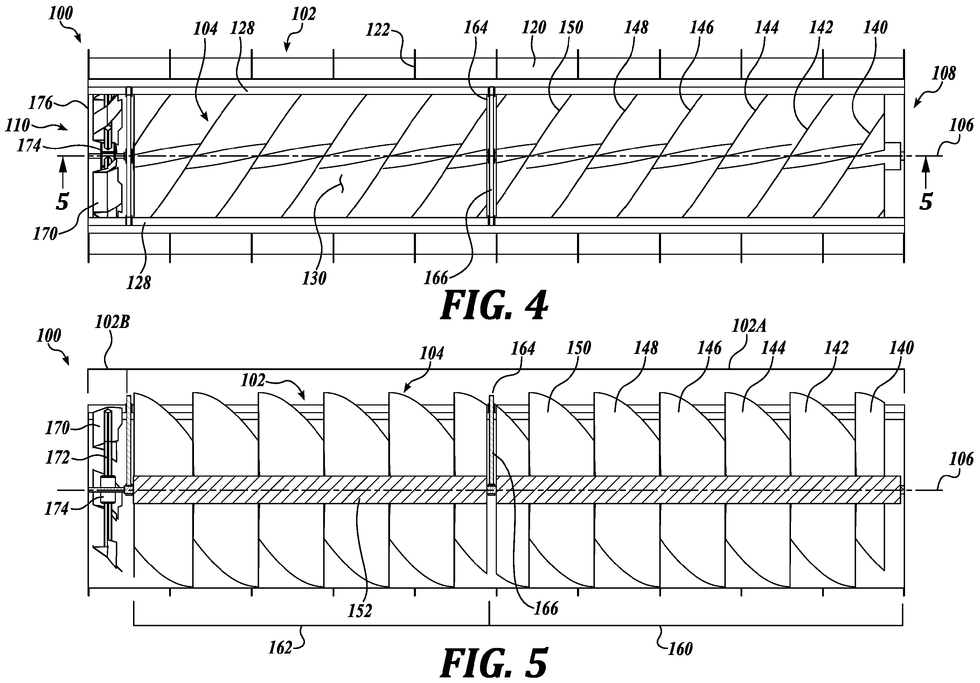

FIGURES 1-5 depict an auger-type chiller 100 of the present disclosure. The chiller 100 includes an elongated semi-cylindrical tank 102 that houses chilling water and a close fitting, multiple blade auger 104 that is mounted within the tank to rotate about a longitudinal axis 106 corresponding to the diametrical center of the tank. The auger 104 can be powered for rotation by a standard known manner in the art to move poultry carcasses from the inlet end 108 of the tank 102 to the outlet end 110. Chilled water at a temperature just above freezing is introduced into the tank 102 at the outlet end 110 of the tank to flow through the tank counter to the direction of flow of the poultry carcasses.

Describing the chiller 100 construction and operation in more detail, the tank 102 includes an auger or cooling section 102A and an unloader section 102B. The auger or cooling section 102A constitutes the majority of the length of the tank, whereas the unloader section 10B occupies a relatively short section at the outlet end 110 of the tank.

The tank 102 includes a semicircular shell 120 with the axis 106 corresponding to the diametrical center of the shell. Circumferentially the shell 120 can extend well above the level of the axis 106, thereby increasing the working volume of the tank 102 over many existing chiller tank designs wherein the water level is limited to the rotational axis of the auger. As a non-limiting example, the shell 120 can extend from 180 degrees to 270 degrees of a full circle.

Reinforcing rings 122 extend semi-circularly around the exterior of the shell and spaced apart locations along the length of the shell. Feet 124 can be formed near the bottoms of the ring 122 to support the chiller on a floor or similar surface. The upper ends of the reinforcing rings are fixed to longitudinal bars 126 that define the upper opening 130 of the tank 102. As such, the bars 126 extend along the upper edges of the tank shell.

One or both of the bars 126 can be in the form of a hollow tube to carry air along the tank 120. The air in the bar 126 can be routed into the tank 120 by delivery tubes (not shown), for example, into the bottom of the tank. Such air serves to agitate the cooling water to achieve more effective cooling of the poultry carcasses.

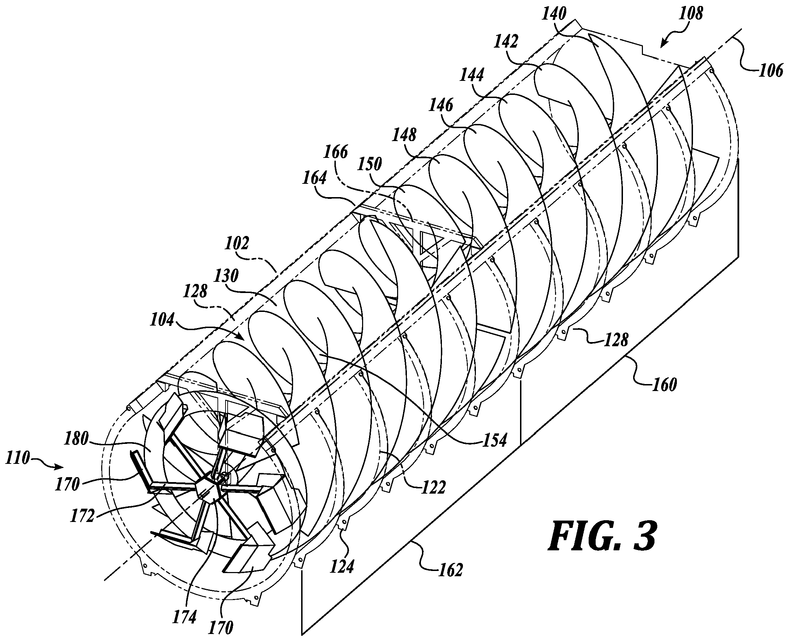

Auger 104 is composed of multiple blades 140, 142, 144, 146, 148, and 150 that are secured to and evenly spaced along a powered auger shaft 152. The shaft 152 extends along the longitudinal center 106 of the tank 102. The outer edges of the blades sweep closely along and around the inside surface of the tank shell 120. Also, the tops of the blades 140-150, as shown in FIGURE 3, extend above the opening 130 of the tank 102.

**In** the present disclosure, the pitch of the auger blades is related to the diameter of the blades. The pitch of the auger blades, which is the distance along the length of the tank 102 between corresponding points on consecutive turns of the auger flighting or blade. In the present disclosure, there is a mathematical relationship between the auger blade pitch and the diameter of the auger blades so that the auger flight geometry is maintained among the various diameters of the chiller tanks 102. In this regard, the pitch of the auger blades is in the range of 1.5 to 3 times the diameter of the auger blades, and more specifically may be in the range of 2 to 2.5 times the diameter of the auger blades.

It will be appreciated that by this construction, adjacent auger blades 140-150 cooperate with the close fitting inside surface of the tank 102, to define a spiral pocket 154 that winds around the auger shaft 128 for receiving poultry carcasses and moving the carcasses along tank 102 from the inlet end 108 to the outlet end 110. These spiral pockets 154 function as horizontal dividers through the tank 102 that prevent the poultry carcasses from moving from one pocket to another, whether the pocket is in front of or behind the pocket in question.

Applicant has found that by forming the auger blades with a pitch of the ranges specified herein, the unobstructed longitudinal length of a spiral pocket is not so long that a carcass can immediately travel along the pocket from the entrance end 108 to the exit end 110 of the tank 102 under the influence of the rotating auger, without having to travel circumferentially around the auger shaft 152. This can be the case if the auger pitch is too long. Requiring the poultry carcass to rotate around the auger shaft 152 slows the travel of the carcass toward the outlet end of the chiller tank 102.

Applicant has also found that in augers of the present disclosure, the number of auger blades that are used can be important. Although FIGURES 1-3 show the use of six auger blades, the number of blades employed depends on the diameter of the tank 102 and thus the diameter of the blades. The larger the diameter of the tank, the larger the number of blades are used. It is contemplated that from four to eight blades would be used based on the tank diameter. In this manner, the distance separating adjacent auger blades 140-150 along the pitch distance of the blades is in the range of from about 36 to about 72 inches (92-183 cm), and more specifically in the range of from about 36 to about 48 inches (92-122 cm). With this separation between adjacent auger blades, the loading of the poultry carcasses in each spiral pocket is at a desired level for sufficient cooling of the poultry carcasses to occur in the chiller 100.

The auger or cooling section 102A of the tank 102 is shown as composed of two sections 160 and 162 connected together at a juncture 164. This construction enables the unassembled tank 102 to be transported from the manufacturing site to the installation location. To this end, a bearing, not shown, is used to support and connect the adjacent ends of the auger shaft 152. The bearing is supported by a hanger structure 166 that spans between the bars 128. The adjacent ends of the auger shaft are rotatably aligned with each other so that the adjacent ends of the corresponding auger blades 140-150 are also in alignment with each other.

The ends of the auger shaft at the tank inlet end 108 and outlet end 110 are also supported by a bearing and a hanger structure similar to hanger structure 166. The hanger structure at the tank outlet end 110 is shown in FIGURES 1-3.

As noted above, the chiller tank 102 includes an unloader section 102B. As in a typical poultry chiller, the purpose of the unloaded section is to remove the chilled poultry carcasses for further processing. To this end, a series of unloader paddles 170 are mounted on the ends of arms that extend radially from a central hub 174 that is rotated about axis 106 by the auger shaft 152.

The paddles 170 are shaped to scoop up the poultry carcasses that have arrived at the unloader section 102B as the paddles sweep closely along the inside surface of the shell 120 of the unloader section and adjacent an end plate 176 that closes off the end of the tank 102. The paddles lift the poultry carcasses to the top of the unloader section, during which travel the poultry carcasses are held captive by the paddles and an end plate 176. Once at the top of the unloader section 102B, the carcasses fall by gravity out an opening or chute 178 formed at the top of an end plate 176 into a receptacle or on to a takeaway conveyor, not shown, for further processing.

A divider or barrier ring 180 extends around the inside surface of the shell 120 to separate the unloader section 102B from the cooling section 102A. The divider/barrier ring functions to limit the rate that the poultry carcasses to pass from the cooling section 102A to the unloader section 102B by providing a barrier at the bottom of the chiller tank so that all of the poultry carcasses exiting a pocket 154 are not immediately deposited into the unloader section 102B to thereby overload the unloader section. As such, some of the poultry carcasses are carried up the sidewall of the tank 102 by the auger blade and then fall off the auger blade and then into the unloader section. To serve its purpose, the divider/barrier ring 180 can have a radial width of from about 1 inch (2.5 cm) to about 30 inches (76 cm), and more specifically from about 8 inches (20 cm) to 24 inches (61 cm).

Although the divider/barrier ring 180 shown is of a substantially constant radial width about its circumference, radial width of the ring can vary about its circumference, for example, being wider at the bottom of the tank 102 and narrower as the ring rises above the tank bottom.

Further, the ring can be of a shape other than circular as shown in the drawings. For example, the ring can be circular in its outer circumference, but of a triangular or other shape in its inner perimeter, thereby to serve its function.

Poultry carcasses are dropped into the top of the chiller tank 102 at the inlet end 108. As the carcasses are dropped in the chiller tank, they fall into a pocket 154, which as explained above is the spiral space formed between two of the auger blades 140-150 and the inner surface of the tank shell 120. The number of pockets 154 corresponds to the number of auger blades 140-150 attached to the auger shaft 152.

As also explained above, the number of auger blades can vary with the size of the tank 102. In the example of the present disclosure shown in FIGURES, 1-3, the auger 104 has six auger blades. As a result, the tank 102 includes six pockets 154. Like the auger blades 140-150, the pockets 154 spiral around the auger shaft 152 and run lengthwise through the auger/cooling section 102A of the tank 102.

Each pocket 154 that is created by the auger 104 extends the length of the auger and thus the poultry carcass cannot cross between the various pockets 154. As a result, although the poultry carcasses are locked into a certain pocket, they are not locked into a certain location lengthwise in the chiller. The poultry carcasses are therefore free to move along the length of the auger. As a result, the poultry carcasses tend to distribute fairly evenly along the length of the chiller tank 102 within a pocket 154 even if there are gaps in loading time or if unloading stops momentarily. The poultry carcasses will stay inside the pockets 154 until exiting into the unloader section 102B of the tank 102.

As the auger 104 rotates, one of the six pockets 154 is always at the bottom of the chiller 100. The pocket 154 at the bottom of the chiller will always be moving towards the unloader section 102B of the chiller 102. The pitch of the auger blades 140-150, being from 1.5 to 3 times the diameter of the auger blades, will seek to push the poultry carcasses toward the unloader section 102B of the tank 102 faster than in single blade chiller, but drag between the carcasses and the water will limit the speed of the carcasses through the water. Also, the auger blades 140-150 will act as paddles to rotate and agitate the poultry carcasses.

The poultry carcasses move towards the unloader section 104B of the tank 102, but for an additional reason the carcasses do not move as fast as the pocket 154 moves toward the unloader section 102B. This is because, in addition to being urged towards the unloader section 102B by the auger blades 140-150, the poultry carcasses also rotate around the auger 104 while in a pocket 140-150 due to the pitch of the auger blades. The rotating of the carcasses around the auger 104 also slows the movement of the carcasses towards the unloader section 102B of the tank 102 because the carcasses are not advancing directly forwardly when rotating around the auger 104.

Another advantage of the present chiller design is that six separate pockets 154 are available for the chilling water to flow through from the tank end 110 to the opposite end 108. However, in a single flight auger system only one pocket is available for this function. As a result, in the present chiller design the water flow speed through the six pockets can be much slower than through the single pocket of a single flight auger system. Thus, the present chiller can be reduced in length relative to an existing single flight auger chiller. This is because a higher volume of chilling water can be used in the present design without causing "push back" against the poultry carcasses, as can occur in a single flight auger system. Additionally and/or alternatively, by using the present multi-flight auger design, since a higher volume of chilling water can be accommodated, a high throughput of poultry carcasses can be achieved over a chiller using a single flight auger.

However, these positive aspects of multi-blade augers may be lost if the pitch of the auger blades is too long. Some carcasses may reach the unloader section without even needing to rotate around the auger. As a result, a significant variation occurs in the dwell time of a poultry carcass in the cooling section 102A of the chiller 100. The variation in dwell time may often be beyond the set point parameter that is acceptable. This may require that the chiller 100 be operated at a slower speed than desired to insure an acceptable dwell time of the carcasses in the chiller, thus resulting in significantly reduced throughput of the entire processing line, not just the chiller.

The present disclosure seeks to address the problems noted in existing poultry chillers, and in particular poultry chillers having using augers with multiple extend-pitch flights, by tightening the auger pitch and introducing additional auger flights. This reduces the opportunity for the poultry carcass to pass through the chiller unrestricted.

The present disclosure also introduces a mathematical coupling between the auger pitch and the auger diameter, thereby maintaining the auger flight geometry through various sizes of chiller diameter. Computer simulation of chiller performance of the present disclosure has shown a significant reduction in dwell time standard deviation with the auger design of the present disclosure.

While illustrative embodiments have been illustrated and described, it will be appreciated that various changes can be made therein without departing from the scope of the invention as defined in the appended claims.

## Claims

1. A chiller (100) for processing food, comprising:
a tank (102) having an inner surface; and
an auger (104) positioned at least partially within the tank (102), wherein:
the auger (104) comprises a longitudinal shaft (152) and at least four auger blades (140-150),
each of the auger blades spirals (140, 150) around the shaft (152) at a position along the longitudinal shaft (152),
a plurality of spiral pockets (154) are formed by the auger blades (140-150) and the inner surface of the tank (102),
the auger blades (140-150) are configured to block passage of a food product between the plurality of spiral pockets (154), **characterized in that**
each of the auger blades (140-150) comprises a pitch in the range of from 1.5 to three times the diameter of the auger blades (140-150), and
the distance separating adjacent auger blades (140-150) along the pitch distance of the auger blades (140-150) is in the range of 36-72 inches (91 to 183 cm).

2. The chiller of claim 1, wherein each of the plurality of auger blades (140-150) comprises a pitch in the range of from 2 to 2.5 times the diameter of the auger blades (140-150).

3. The chiller of claim 1 or 2, wherein the number of auger blades (140-150) comprises from four to eight auger blades depending on the diameter of the auger blades.

4. The chiller of claim 1, wherein the distance separating adjacent auger blades (140-150) along the pitch of the auger blades is from 36 to 48 inches (91 cm to 122 cm .

5. The chiller of claim 1 or 2, wherein each of the auger blades (140-150) are substantially equally distant from one another around the shaft (152).

6. The chiller of claim 1 or 2, wherein the tank (102) comprises an auger section (102A) and an unloader section (102B).

7. The chiller of claim 6, wherein the unloader section (102B) of the tank (102) comprises a plurality of unloader paddles (170).

8. The chiller of claim 6, wherein the unloader section (102B) of the tank (102) comprises an unloader chute (178).

9. The chiller of claim 7, further comprising a separator ring (180) extending around the interior of the tank (102) to separate the auger section (102A) from the unloader section (102B) of the tank (102).

10. The chiller of claim 1 or 2, wherein said auger is operable to force a poultry carcass to rotate around the shaft (152) when the auger (104) rotates.

11. The chiller of claim 1 or 2, wherein the auger is configured to lift the poultry carcass from the auger section (102A) into the unloader section (102B).

12. The chiller of claim 1 or 2, wherein each of said auger blades (140-150) spirals at least one full revolution around the shaft (152).

## Patentansprüche

1. Kühler (100) zum Verarbeiten von Nahrung, der Folgendes umfasst:
einen Tank (102), der eine Innenfläche aufweist, und
eine Förderschnecke (104), die zumindest teilweise innerhalb des Tanks (102) angeordnet ist, wobei:
die Förderschnecke (104) eine Längswelle (152) und mindestens vier Förderschneckenflügel (140-150) umfasst,
sich jeder von den Förderschneckenflügeln bei einer Position entlang der Längswelle (152) in einer Spirale (140, 150) um die Welle (152) bewegt,
eine Vielzahl von Spiraltaschen (154) durch die Förderschneckenflügel (140-150) und die Innenfläche des Tank (102) gebildet wird,
die Förderschneckenflügel (140-150) dafür konfiguriert sind, einen Durchgang eines Nahrungserzeugnisses zwischen der Vielzahl von Spiraltaschen (154) zu blockieren,
**dadurch gekennzeichnet, dass**
jeder von den Förderschneckenflügeln (140-150) eine Steigung in dem Bereich vom 1,5- bis zum Dreifachen des Durchmessers der Förderschneckenflügel (140-150) umfasst und
der Abstand, der benachbarte Förderschneckenflügel (140-150) entlang des Steigungsabstandes der Förderschneckenflügel (140-150) trennt, in dem Bereich von 36 bis 72 Zoll (91 bis 183 cm) liegt.

2. Kühler nach Anspruch 1, wobei jeder von der Vielzahl von Förderschneckenflügeln (140-150) eine Steigung in dem Bereich vom 2- bis zum 2,5-Fachen des Durchmessers der Förderschneckenflügel (140-150) umfasst.

3. Kühler nach Anspruch 1 oder 2, wobei die Anzahl von Förderschneckenflügeln (140-150) in Abhängigkeit von dem Durchmesser der Förderschneckenflügel vier bis acht Förderschneckenflügel umfasst.

4. Kühler nach Anspruch 1, wobei der Abstand, der benachbarte Förderschneckenflügel (140-150) entlang der Steigung der Förderschneckenflügel trennt, von 36 bis 48 Zoll (91 cm bis 122 cm) beträgt.

5. Kühler nach Anspruch 1 oder 2, wobei jeder von den Förderschneckenflügeln (140-150) im Wesentlichen um die Welle (152) gleich weit voneinander entfernt ist.

6. Kühler nach Anspruch 1 oder 2, wobei der Tank (102) eine Förderschneckensektion (102A) und eine Entladesektion (102B) umfasst.

7. Kühler nach Anspruch 6, wobei die Entladesektion (102B) des Tanks (102) eine Vielzahl von Entladeschaufeln (170) umfasst.

8. Kühler nach Anspruch 6, wobei die Entladesektion (102B) des Tanks (102) einen Entladerutsche (178) umfasst.

9. Kühler nach Anspruch 7, der ferner einen Separatorring (180) umfasst, der sich um das Innere des Tanks (102) erstreckt, um die Förderschneckensektion (102A) von der Entladesektion (102B) des Tanks (102) zu trennen.

10. Kühler nach Anspruch 1 oder 2, wobei die Förderschnecke funktionsfähig ist, um einen Geflügelschlachtkörper zu zwingen, sich um die Welle (152) zu drehen, wenn sich die Förderschnecke (104) dreht.

11. Kühler nach Anspruch 1 oder 2, wobei die Förderschnecke dafür konfiguriert ist, den Geflügelschlachtkörper von der Förderschneckensektion (102A) in die Entladesektion (102B) zu heben.

12. Kühler nach Anspruch 1 oder 2, wobei sich jeder von den Förderschneckenflügeln (140-150) zumindest eine volle Umdrehung in einer Spirale um die Welle (152) bewegt.

## Revendications

1. Refroidisseur (100) pour le traitement de produits alimentaires, comprenant :
un réservoir (102) présentant une surface intérieure ; et
une vis sans fin (104) positionnée au moins partiellement à l'intérieur du réservoir (102), dans lequel :
la vis sans fin (104) comprend un arbre longitudinal (152) et au moins quatre lames de vis sans fin (140-150),
chacune des lames de vis sans fin (140, 150) s'enroule en spirale autour de l'arbre (152) à une position le long de l'arbre longitudinal (152),
une pluralité de cavités en spirale (154) sont formées par les lames de vis sans fin (140-150) et la surface intérieure du réservoir (102),
les lames de vis sans fin (140-150) sont configurées pour empêcher le passage d'un produit alimentaire entre la pluralité de cavités en spirale (154), **caractérisé en ce que** :
chacune des lames de vis sans fin (140-150) présente un pas compris entre 1,5 et trois fois le diamètre des lames de vis sans fin (140-150),
la distance séparant des lames de vis sans fin (140-150) adjacentes, mesurée le long des pas des lames de vis sans fin (140-150), est comprise entre 36 et 72 pouces (91 à 183 cm).

2. Refroidisseur selon la revendication 1, dans lequel chacune de la pluralité de lames de vis sans fin (140-150) présente un pas compris entre 2 et 2,5 fois le diamètre des lames de vis sans fin (140-150).

3. Refroidisseur selon la revendication 1 ou 2, dans lequel le nombre de lames de vis sans fin (140-150) est compris entre quatre et huit lames de vis sans fin, en fonction du diamètre des lames de vis sans fin.

4. Refroidisseur selon la revendication 1, dans lequel la distance séparant des lames de vis sans fin (140-150) adjacentes, le long du pas des lames de vis sans fin, est comprise entre 36 et 48 pouces (91 cm à 122 cm).

5. Refroidisseur selon la revendication 1 ou 2, dans lequel chacun des lames de vis sans fin de vis (140-150) sont disposées à des distances sensiblement égales les unes des autres autour de l'arbre (152).

6. Refroidisseur selon la revendication 1 ou 2, dans lequel le réservoir (102) comprend une section à vis sans fin (102A) et une section de déchargement (102B).

7. Refroidisseur selon la revendication 6, dans lequel la section de déchargement (102B) de la réservoir (102) comprend une pluralité de palettes de déchargement (170).

8. Refroidisseur selon la revendication 6, dans lequel la section de déchargement (102B) du réservoir (102) comprend une goulotte de déchargement (178).

9. Refroidisseur selon la revendication 7, comprenant en outre une bague de séparation (180) s'étendant à l'intérieur du réservoir (102) pour séparer la section à vis sans fin (102A) de la section de déchargement (102B) du réservoir (102).

10. Refroidisseur selon la revendication 1 ou 2, dans lequel ladite vis sans fin est conçue pour amener une carcasse de volaille à tourner autour de l'arbre (152) lorsque la vis sans fin (104) est en rotation.

11. Refroidisseur selon la revendication 1 ou 2, dans lequel la vis sans fin est configurée pour soulever la carcasse de volaille depuis la section à vis sans fin (102A) vers la section de déchargement (102B).

12. Refroidisseur selon la revendication 1 ou 2, dans lequel chacune desdites lames de vis sans fin (140-150) forme une spirale effectuant au moins un tour complet autour de l'arbre (152).
